# EUROPEAN PATENT APPLICATION

(11) **EP 2 208 565 A1**
(43) Date of publication of application: **21.07.2010**
(21) Application number: 10250057.6
(22) Date of filing: 14.01.2010
(51) Int. Cl.: B23D 61/12

(54) **Saw blade**

(30) Priority: 15.01.2009 US 144927 P; 28.12.2009 US 647696
(71) Applicant: Techtronic Power Tools Technology Limited, Road Town, Tortola (VG)
(72) Inventor: Evatt, Thomas, Six Mile South Carolina 29682 (US); Davidian, Rick, Waxhaw North Carolina 28173 (US)
(74) Representative: Holmes, Matthew Peter

(57) **Abstract**

A saw blade is provided for cutting a work piece. The saw blade comprises a body including a first end and a second end, the body defining a longitudinal axis of the saw blade. The body includes a cutting edge formed along a portion of the body and extending to at least the first end of the body. A connecting portion extends from the second end of the body to a free end of the saw blade and defines a longitudinal axis co-aligned with the longitudinal axis. The connecting portion includes a shank having a first edge and a second edge substantially parallel to the first edge. The shank is positioned between the second end of the body and the free end of the saw blade and defines a first lateral width of the connecting portion. A first holding tab extends laterally outwardly from the first edge of the shank, and a second holding tab extends laterally outwardly from the second edge of the shank. The first and second holding tabs are aligned with each other and define a second lateral width of the connecting portion that is greater than the first lateral width. A mounting hole is formed in the shank for receiving a fastener of a blade clamp, and a recess is formed in the shank at the free end of the saw blade.

## Description

### FIELD OF THE INVENTION

The present invention relates to saw blades.

### BACKGROUND

Saw blades are usable with reciprocating saws to cut various types of work pieces. Saw blades typically include either a U-shank style for connection to reciprocating saws having U-style blade clamps or a T-shank style for connection to reciprocating saws having T-style blade clamps. However, U-shank style blades are not usable with T-style blade clamps, and T-shank style blades cannot be as securely connected to U-style blade clamps as the U-shank style blades. Therefore, if an operator uses reciprocating saws having both styles of blade clamps, he or she must keep both types of saw blades available.

### SUMMARY

In one embodiment, the invention provides a saw blade. The saw blade comprises a body including a first end and a second end, the body defining a longitudinal axis of the saw blade. The body includes a cutting edge formed along a portion of the body and extending to at least the first end of the body. A connecting portion extends from the second end of the body to a free end of the saw blade and defines a longitudinal axis co-aligned with the longitudinal axis. The connecting portion includes a shank having a first edge and a second edge substantially parallel to the first edge. The shank is positioned between the second end of the body and the free end of the saw blade and defines a first lateral width of the connecting portion. A first holding tab extends laterally outwardly from the first edge of the shank, and a second holding tab extends laterally outwardly from the second edge of the shank. The first and second holding tabs are aligned with each other and define a second lateral width of the connecting portion that is greater than the first lateral width. A mounting hole is formed in the shank for receiving a fastener of a blade clamp, and a recess is formed in the shank at the free end of the saw blade.

The recess may be semi-circular. The recess may have a radius between approximately 0.059 inches and approximately 0.069 inches.

The mounting hole may include a center that is positioned along the longitudinal axis of the connecting portion, and further wherein the mounting hole center may be between approximately 0.38 inches and approximately 0.40 inches from the free end of the saw blade.

The shank may have a shank length defined by the distance from the free end to a nearest portion of one of the holding tabs. The shank length may be between approximately 0.55 inches and approximately 0.57 inches.

The first lateral width may be between approximately 0.231 inches and approximately 0.241 inches. The second lateral width may be between approximately 0.310 inches and approximately 0.320 inches.

In another embodiment the invention provides a saw blade for reciprocation along a longitudinal axis. The saw blade includes a blade portion extending along the axis from a first end of the saw blade to an intermediate region of the saw blade, and a connecting portion extending from the intermediate region to a second end of the saw blade. The connecting portion includes a holding tab extending outwardly from the saw blade and substantially perpendicular to the axis and a shank extending along the axis from the holding tab to the second end of the saw blade. A recess is formed in the shank at the second end.

The saw blade may comprise a mounting hole formed in the shank between the holding tab and the second end, the mounting hole configured to receive a fastener of a U-style blade clamp to secure the saw blade to the U-style blade clamp.

The recess may be defined by a radius. The recess may be centered along the axis at the second end. The radius may be between approximately 0.059 inches and approximately 0.069 inches.

The shank may have a shank length defined by the distance from the second end to a nearest portion of the holding tab. The shank length may be between approximately 0.55 inches and approximately 0.57 inches.

In another embodiment, the invention provides a reciprocating saw device having a saw blade according to any of the foregoing aspects of the invention.

Other aspects of the invention will become apparent by consideration of the detailed description and accompanying drawings.

An object of the invention is to mitigate or obviate to some degree one or more problems associated with known saw blades.

One skilled in the art will derive from the following description other objects of the invention. Therefore, the foregoing statement of object is not exhaustive and serves merely to illustrate one of the many objects of the present invention.

### BRIEF DESCRIPTION OF THE DRAWINGS

FIG. 1 is a plan view of a saw blade according to one embodiment of the invention.

FIG. 2 is an enlarged view of a portion of the saw blade shown in FIG. 1.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein are for the purpose of description and should not be regarded as limiting.

### DETAILED DESCRIPTION

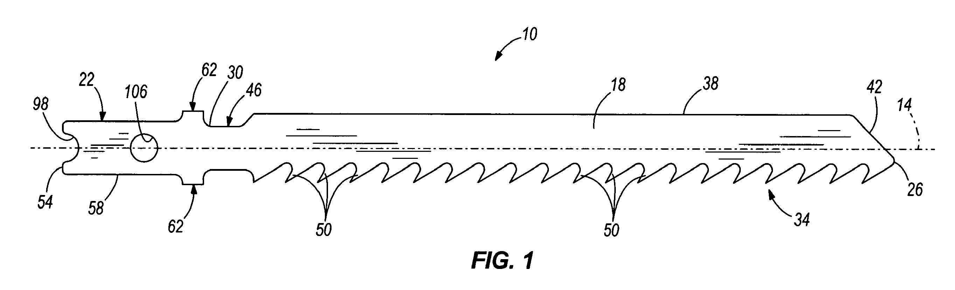

FIG. 1 illustrates a saw blade 10 according to one embodiment of the invention. The saw blade 10 is connectable to a reciprocating saw, such as a jigsaw or the like, for reciprocation along a longitudinal axis 14 to cut a work piece (not shown). In the illustrated embodiment, the saw blade 10 includes a blade portion 18 for cutting the work piece and a connecting portion 22 for connecting the saw blade 10 to the reciprocating saw.

The blade portion 18 is a body having a first end 26 and a second end 30, a leading or cutting edge 34 and a trailing edge 38. The first end 26 defines a tapered tip portion 42 of the saw blade. The second end 30 defines, in part, a transition region 46 between the blade portion 18 and the connecting portion 22. For descriptive purposes, the transition region 46 could be defined by either the connecting portion 22 or the blade portion 18, as both the blade portion and the cutting portion are integral to the saw blade 10 as a whole, with the transition region 46 intermediate the blade portion 18 and the cutting portion 22. The transition region 46 may be of various lengths or geometries.

The leading edge 34 and trailing edge 38 of the blade portion 18 are substantially parallel to the longitudinal axis 14. The leading edge 34 includes a series of teeth 50 extending generally away from the longitudinal axis 14. The teeth 50 are configured to cut a work piece as the saw blade 10 is reciprocated. In the illustrated embodiment, all of the teeth 50 are generally the same size and shape. In other embodiments, the teeth may have different sizes and/or shapes relative to each other such that the saw blade 10 has a symmetrical or an irregular tooth pattern. Additionally or alternatively, the saw blade 10 may have a blade portion that is relatively longer, shorter, wider, or narrower than the illustrated blade portion 18.

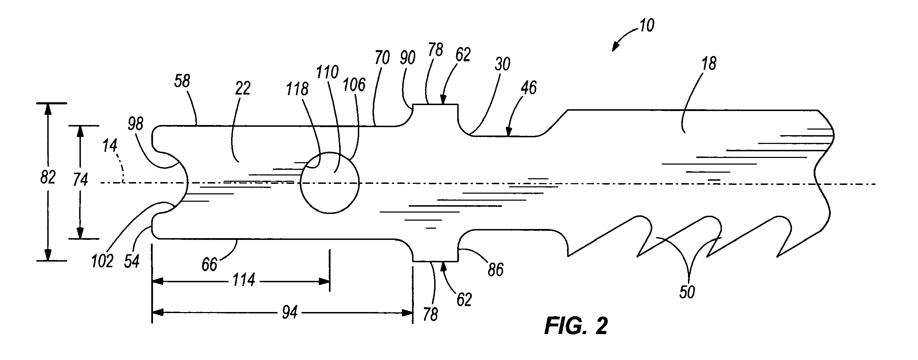

FIG. 2 illustrates the connecting portion 22 and the second end 30 of the blade portion 18 of saw blade 10 in more detail. The connecting portion 22 lies along the axis 14 and extends from the second end 30 of the blade portion 18 (i.e., the transition region 46) to a free end 54 of the saw blade 10. The connecting portion 22 includes a shank 58 and two holding tabs 62.

The shank 58 includes a first edge 66 and a second edge 70, both edges being substantially parallel to the axis 14 and, therefore, to each other. The perpendicular distance from the first edge 66 to the second edge 70 defines a first lateral width 74 of the connecting portion 22. In the illustrated embodiment, the first lateral width 74 is between approximately 0.231 inches and approximately 0.241 inches.

The holding tabs 62 are positioned on opposite sides of the connecting portion 22 and extend generally perpendicularly away from the first edge 66 and second edge 70 of the shank 58. The perpendicular distance between outermost edges 78 of the holding tabs 62 defines a second lateral width 82 of the connecting portion 22. In the illustrated embodiment, the second lateral width 82 is between approximately 0.310 inches and approximately 0.320 inches.

A first edge 86 of each of the holding tabs 62 lies adjacent the second end 30 of the blade portion 18 and extends perpendicularly to the outermost edge 78. A second edge 90 of each of the holding tabs 62 lies adjacent the first or second edge 66, 70 of the shank 58 and extends perpendicularly to the outermost edge 78. The tabs 62 facilitate coupling the saw blade 10 to reciprocating saws with T-style blade clamps. After the connecting portion 22 is inserted into an opening in such a blade clamp, a cam member, or rib, within the blade clamp engages at least one of the tabs 62 to secure the saw blade 10 to the reciprocating saw. In some embodiments, a slot in the blade clamp receives at least one of the holding tabs 62 to secure the saw blade 10 in place. The cam member or the slot holds the connecting portion 22 within the opening of the blade clamp to prevent movement of the saw blade 10 further into or out of the opening without first releasing the clamp.

The shank 58 has a shank length 94 defined between the second edge 90 of one of the holding tabs and the free end 54 of the connecting portion 22. In the illustrated embodiment, the shank length 94 is between approximately 0.55 inches and approximately 0.57 inches. This particular shank length 94 allows the saw blade 10 to be connected to both T-style blade clamps and U-style blade clamps. If the shank length is longer or shorter, some blade clamps (particularly T-style blade clamps) may not be able to fully close such that the blade clamp does not properly secure the saw blade 10 within the opening.

The illustrated shank 58 also defines an end recess or cutout 98 formed in the free end 54 of the connecting portion 22. In the illustrated embodiment, the recess 98 is generally semi-circularly shaped with a radius 102 between approximately 0.059 inches and approximately 0.069 inches. The illustrated recess 98 is centered along the longitudinal axis 14 of the saw blade 10 at the free end 54. The recess 98 provides clearance for internal components of certain blade clamps to help properly and fully insert the connecting portion 22 into the blade clamp. In other embodiments, the recess may be shaped as a "V" or square-shaped notch.

A mounting hole 106 is formed in the shank 58 between the holding tabs 62 and the free end 54. In the illustrated embodiment, the mounting hole 106 is positioned generally along the longitudinal axis 14 of the saw blade 10. A center 110 of the mounting hole is located a distance 114 from the free end 54 of the connecting portion 22. In the illustrated embodiment, the distance 114 is between approximately 0.38 inches and approximately 0.40 inches. The mounting hole 106 facilitates coupling the saw blade 10 to reciprocating saws with U-style blade clamps. After the connecting portion 22 is inserted into an opening in such a blade clamp, a fastener (e.g., a screw or bolt) is inserted through the mounting hole 106 to secure the saw blade 10 to the reciprocating saw. The fastener engages an inner edge 118 of the connecting portion 22 that defines the mounting hole 106 to prevent movement of the saw blade 10 further into or out of the opening without first removing the fastener.

The illustrated connecting portion 22 allows the saw blade 10 to be used with reciprocating saws having either a T-style blade clamp or a U-style blade clamp. A user therefore does not need to remember the blade clamp style of his or her particular reciprocating saw when purchasing new blades. In addition, users who own multiple reciprocating saws having different styles of blade clamps can purchase one type of saw blade that is usable with both types of blade clamps.

Although the invention has been described in detail with reference to one particular embodiment, variations and modifications exist within the scope and spirit of one or more independent aspects of the invention as described. Various features and advantages of the invention are set forth in the following claims.

In general, the invention provides a saw blade for cutting a work piece. The saw blade comprises a body including a first end and a second end, the body defining a longitudinal axis of the saw blade. The body includes a cutting edge formed along a portion of the body and extending to at least the first end of the body. A connecting portion extends from the second end of the body to a free end of the saw blade and defines a longitudinal axis co-aligned with the longitudinal axis. The connecting portion includes a shank having a first edge and a second edge substantially parallel to the first edge. The shank is positioned between the second end of the body and the free end of the saw blade and defines a first lateral width of the connecting portion. A first holding tab extends laterally outwardly from the first edge of the shank, and a second holding tab extends laterally outwardly from the second edge of the shank. The first and second holding tabs are aligned with each other and define a second lateral width of the connecting portion that is greater than the first lateral width. A mounting hole is formed in the shank for receiving a fastener of a blade clamp, and a recess is formed in the shank at the free end of the saw blade.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It is to be understood that, if any prior art publication is referred to herein, such reference does not constitute an admission that the publication forms a part of the common general knowledge in the art, in Australia or any other country.

## Claims

1. A saw blade comprising:
a body including a first end and a second end, the body defining a longitudinal axis of the saw blade and including a cutting edge formed along a portion of the body and extending to at least the first end of the body; and
a connecting portion extending from the second end of the body, the connecting portion defining a longitudinal axis co-aligned with the longitudinal axis of the body and a free end of the saw blade, the connecting portion including,
a shank having a first edge and a second edge substantially parallel to the first edge, the shank positioned between the second end of the body and the free end of the saw blade, and the shank defining a first lateral width of the connecting portion,
a first holding tab extending laterally outwardly from the first edge of the shank,
a second holding tab extending laterally outwardly from the second edge of the shank, the first and second holding tabs aligned with each other, wherein the holding tabs define a second lateral width of the connecting portion that is greater than the first lateral width, a mounting hole formed in the shank for receiving a fastener of a blade clamp, and
a recess formed in the shank at the free end of the saw blade.

2. The saw blade of claim 1, wherein the recess is semi-circular.

3. The saw blade of claim 2, wherein the recess has a radius between approximately 0.059 inches and approximately 0.069 inches.

4. The saw blade of any one of claims 1 to 3, wherein the mounting hole includes a center that is positioned along the longitudinal axis of the connecting portion, and further wherein the mounting hole center is between approximately 0.38 inches and approximately 0.40 inches from the free end of the saw blade.

5. The saw blade of any one of the preceding claims, wherein the shank has a shank length defined by the distance from the free end to a nearest portion of one of the holding tabs.

6. The saw blade of claim 5, wherein the shank length is between approximately 0.55 inches and approximately 0.57 inches.

7. The saw blade of any one of the preceding claims, wherein the first lateral width is between approximately 0.231 inches and approximately 0.241 inches and/or the second lateral width is between approximately 0.310 inches and approximately 0.320 inches.

8. A saw blade for reciprocation along a longitudinal axis, the saw blade comprising:
a blade portion extending along the axis from a first end of the saw blade to an intermediate region of the saw blade;
a connecting portion extending from the intermediate region to a second end of the saw blade, the connecting portion including,
a holding tab extending outwardly from the saw blade and substantially perpendicular to the axis;
a shank extending along the axis from the holding tab to the second end of the saw blade; and
a recess formed in the shank at the second end.

9. The saw blade of claim 8, further comprising a mounting hole formed in the shank between the holding tab and the second end, the mounting hole configured to receive a fastener of a U-style blade clamp to secure the saw blade to the U-style blade clamp.

10. The saw blade of claim 8 or claim 9, wherein the recess is defined by a radius.

11. The saw blade of claim 10, wherein the recess is centered along the axis at the second end.

12. The saw blade of claim 10 or claim 11, wherein radius is between approximately 0.059 inches and approximately 0.069 inches.

13. The saw blade of any one of claims 8 to 12, wherein the shank has a shank length defined by the distance from the second end to a nearest portion of the holding tab.

14. The saw blade of claim 13, wherein the shank length is between approximately 0.55 inches and approximately 0.57 inches.

15. A reciprocating saw device having a saw blade according to any one of the preceding claims.
